# EUROPEAN PATENT APPLICATION

(11) **EP 1 493 759 A1**
(43) Date of publication of application: **05.01.2005**
(21) Application number: 03102021.7
(22) Date of filing: 04.07.2003
(51) Int. Cl.: C08F 10/00

(54) **Polymerisation process**

(71) Applicant: TOTAL PETROCHEMICALS RESEARCH FELUY, 7181 Seneffe (Feluy) (BE)
(72) Inventor: Razavi, Abbas, B-7000, Mons (BE)
(74) Representative: Leyder, Francis

(57) **Abstract**

Provided is a method for the production of an olefin co-polymer, which method comprises co-polymerising two or more olefin monomers in the presence of a metallocene catalyst, wherein the metallocene catalyst comprises a metallocene having the following formula:

R"(CpRₘ)(FluR'ₙ)MQ₂

wherein Cp comprises a cyclopentadienyl ring; Flu comprises a fluorenyl ring; R" comprises a structural bridge imparting stereorigidity to the component; each R is the same or different and is an organic group; m is an integer of from 1-4; each R' is the same or different and is an organic group; n is an integer of from 0-8; M is a metal atom from group IVB of the Periodic Table or is vanadium; and each Q is a hydrocarbon having from 1-20 carbon atoms or is a halogen.

## Description

The present invention relates to a process for the production of a polymer, in particular a co-polymer. The co-polymer produced according to the present method is generally a quasi-random co-polymer having good optical properties (e.g. low haze and/or high crystallinity).

In the past, attempts have been made to produce random olefin polymers using metallocene catalysts. In Angew. Chem. Int. Ed. 1998, Vol. 37, No. 7, pages 922-925, Leclerc and Waymouth describe metallocene compounds having a cyclopentadiene ligand (Cp) and a fluorene ligand (Flu), which can be used in the co-polymerisation of ethene and propylene. In particular, zirconium metallocene catalysts comprising unsubstituted Cp, 3-methyl Cp, 3-*tert*-butyl Cp and 3,4-dimethyl Cp ligands are disclosed. These catalysts are only partially successful in producing quasi-random polymers, and a significant degree of randomisation always remains in polymer products produced using these catalysts.

Metallocene catalysts are known to be useful in various polymerisation processes. For example, in EP 0581236, specific metallocene catalysts are described as being useful for the production of isotactic polypropylene (iPP).

However, up to present there exists no method for producing olefin co-polymers having a random nature to the desired degree, which method also has the advantages of employing metallocene catalysts to form the polymer product. There is thus still a need for an improved method of forming random olefin co-polymers.

In particular, known random polymers have had a problem with a large amount of solubles (extractables). These are low molecular weight highly co-polymerised species. This was a problem with first generation catalysts, such as chromium and Ziegler-Natta catalysts. The solubles migrate to the surface creating a haze in the films, which is a disadvantage for many uses particularly in the food and medical areas.

With a view to overcoming these problems, attempts were made to replace these catalysts with bis-indenyl metallocene catalysts. This lead to much more homogeneous (quasi-random) chain compositions. However, it proved difficult and expensive to produce pure racemic bis-indenyl catalysts, and even when this can be achieved, the pure catalysts unavoidably undergo some conversion to their meso derivatives. The meso derivative produces atactic polypropylene which is a soluble/extractable as discussed above. A further problem is that such catalysts lead to low molecular weight polymers, due to the occurrence of 2,1-insertion. This is because after 2,1-insertion occurs, there is increased steric hindrance at the metal centre. This has the effect that ethylene is the only species present that can react further to any significant degree. Ethylene reaction is much more prone to chain termination by chain transfer than propylene reaction and so chain termination is greatly increased.

Accordingly, it is an object of the present invention to solve the problems associated with the above prior art. It is a further object of the present invention to provide an improved method for the formation of quasi-random olefin co-polymers, which polymers have improved optical properties, such as low haze and high transparency. It is a further object of the present invention to provide an improved method for forming olefin co-polymers having a high crystallinity.

Thus, the present invention provides a method for the production of an olefin co-polymer, which method comprises co-polymerising two or more olefin monomers in the presence of a metallocene catalyst, wherein the metallocene catalyst comprises a metallocene having the following formula:

R"(CpRₘ)(FluR'ₙ)MQ₂

wherein Cp comprises a cyclopentadienyl ring; Flu comprises a fluorenyl ring; R" comprises a structural bridge imparting stereorigidity to the component; each R is the same or different and comprises an organic group; m is an integer of from 1-4; each R' is the same or different and comprises an organic group; n is an integer of from 0-8; M is a metal atom from group IVB of the Periodic Table or is vanadium; and each Q is a hydrocarbon having from 1-20 carbon atoms or is a halogen.

The methods of the present invention involve a process of co-polymerisation. In the context of the present invention, co-polymerisation means polymerising two or more olefin monomers together in the same reaction zone under polymerisation conditions. It is preferred that the present method involves the co-polymerisation of two olefin monomers to form an olefin co-polymer, but three, four or more olefin monomers may be used together in the present methods, if desired, to form, for example, a terpolymer. Preferably, propylene and ethylene are used together as monomers in this invention to form an ethylene/propylene co-polymer.

A further advantage of the cyclopentadienyl-fluorenyl (Cp-Flu) catalyst system used in the present invention is that less ethylene comonomer is required in the feed. Consequently, the ethylene/propylene copolymer obtained has a lower melting temperature than that of an ethylene/propylene copolymer obtained with a bis-indenyl catalyst system. The melting temperature of the ethylene/propylene copolymers of the invention is preferably from 100-110°C, more preferably from 103-107°C and most preferably about 105°C. This compares with a melting temperature of about 125°C for polymers obtained with a bis-indenyl catalyst system for the same amount of ethylene in the feed.

The methods of the present invention are particularly advantageous, since they allow for the production of improved quasi-random olefin co-polymers, having good crystallinity and good optical properties, such as low haze and high transparency. The above catalysts have no meso form (they are single site catalysts), they do not suffer the problems of producing extractables, or low molecular weight product and they have no regio-defects.

Without being bound by theory, it is believed that the particular substitution pattern in the Cp ring of the catalysts used in the present methods leads to polymer products that are quasi-random in nature. It is thought that the substitution pattern provides a catalytic site having a first 'side' that is relatively sterically hindered, and a second side that is relatively sterically unhindered. The mechanism of polymerisation involves alternate olefin insertion, first from one side and then from the other. The steric environment of the two sides of the catalyst favours insertion of the less bulky olefin monomer from the sterically hindered side, and insertion of the more bulky olefin monomer from the sterically unhindered side. Thus, using the present catalysts, alternation between first and second olefin monomers can be achieved in the polymer product. The steric environment of a catalyst representative of those of the present invention is illustrated in scheme 1 below (metal atom and Q groups not shown):

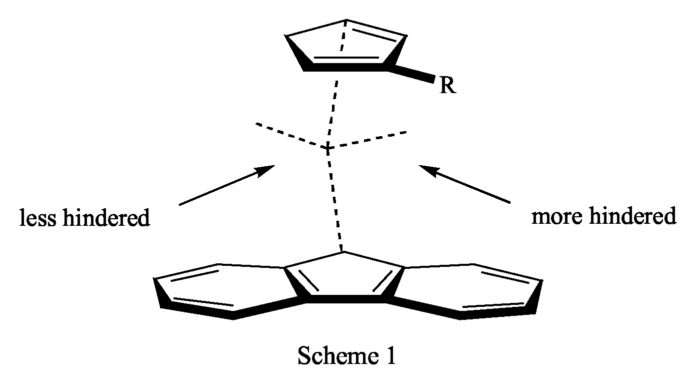

It is thought that it is this more ordered insertion of the monomers that leads to polymers having a more even distribution of monomers. In the absence of such ordered insertion, the monomers tend to group together in blocks, the most reactive monomer forming the first block and the less reactive monomer forming the second block. In the present polymers, the monomers do not form such distinct blocks, but are more evenly distributed throughout the length of each polymer molecule. This has been described previously as a 'random' co-polymer. However due to the quasi-ordered nature of monomer insertion described above, the polymer is more accurately characterised as quasi-random in nature.

It is further worth noting that, the angle between the Cp rings of the Cp-Flu type catalyst used in the present invention is of the order of 117°, being smaller than the equivalent angle of the bis-indenyl catalysts, which is of the order of 125°. This ensures that both monomer and co-monomer insertion is more difficult. As a result, less co-monomer is consumed and the melting temperature of the resulting copolymer is reduced.

The substituents that may be present on the cyclopentadiene and fluorene rings (R and R' respectively) will now be described in more detail. The substituent or substituents are not particularly limited. The cyclopentadiene ring (Cp) is at least mono-substituted, but may comprise one or more further substituents, provided that these further substituents do not adversely interfere with the ability of the present method to produce quasi-random olefin co-polymers. The Cp ring may be substituted with the same substituent throughout, or with different substituents. The fluorene ring (Flu) may be substituted or unsubstituted and may also be substituted with the same substituent throughout, or with different substituents.

The substituents on the Cp and Flu rings are not particularly limited and may comprise any organic group and/or one or more atoms from any of groups IIIA, IVA, VA, VIA or VIIA of the Periodic Table, such as a B, Si, N, P, O, or S atom or a halogen atom (e.g. F, Cl, Br or I).

When the substituent comprises an organic group, the organic group preferably comprises a hydrocarbon group. The hydrocarbon group may comprise a straight chain, a branched chain or a cyclic group. Independently, the hydrocarbon group may comprise an aliphatic or an aromatic group. Also independently, the hydrocarbon group may comprise a saturated or unsaturated group.

When the hydrocarbon comprises an unsaturated group, it may comprise one or more alkene functionalities and/or one or more alkyne functionalities. When the hydrocarbon comprises a straight or branched chain group, it may comprise one or more primary, secondary and/or tertiary alkyl groups. When the hydrocarbon comprises a cyclic group it may comprise an aromatic ring, an aliphatic ring, a heterocyclic group, and/or fused ring derivatives of these groups. The cyclic group may thus comprise a benzene, naphthalene, anthracene, indene, fluorene, pyridine, quinoline, thiophene, benzothiophene, furan, benzofuran, pyrrole, indole, imidazole, thiazole, and/or an oxazole group, as well as regioisomers of the above groups.

The number of carbon atoms in the hydrocarbon group is not especially limited, but preferably the hydrocarbon group comprises from 1-40 C atoms. The hydrocarbon group may thus be a lower hydrocarbon (1-6 C atoms) or a higher hydrocarbon (7 C atoms or more, e.g. 7-40 C atoms). The number of atoms in the ring of the cyclic group is not especially limited, but preferably the ring of the cyclic group comprises from 3-10 atoms, such as 3, 4, 5, 6 or 7 atoms.

The groups comprising heteroatoms described above, as well as any of the other groups defined above, may comprise one or more heteroatoms from any of groups IIIA, IVA, VA, VIA or VIIA of the Periodic Table, such as a B, Si, N, P, O, or S atom or a halogen atom (e.g. F, Cl, Br or I). Thus the substituent may comprise one or more of any of the common functional groups in organic chemistry, such as hydroxy groups, carboxylic acid groups, ester groups, ether groups, aldehyde groups, ketone groups, amine groups, amide groups, imine groups, thiol groups, thioether groups, sulphate groups, sulphonic acid groups, and phosphate groups etc. The substituent may also comprise derivatives of these groups, such as carboxylic acid anhydrydes and carboxylic acid halides.

In addition, any substituent may comprise a combination of two or more of the substituents and/or functional groups defined above.

Typically, the substituents are independently selected from an aryl group and a hydrocarbyl group having from 1-20 carbon atoms. The most preferred substituents are methyl groups. Other preferred substituents include Et, n-Pr, i-Pr, n-Bu, t-Bu, Me₃Si, R-O, cycloalkyl, and halogen.

In respect of the Cp ring, it is especially preferred that at least one group R comprises a bulky group of the formula ZR*₃ in which Z is an atom from group IVA of the Periodic Table and each R* is the same or different and is chosen from a hydrogen or a hydrocarbyl group having from 1-20 carbon atoms. Optionally, when such an R group is present, at least one further group R may be present said further group comprising a group of the formula YR#₃ in which Y is an atom from group IVA of the Periodic Table, and each R# is the same or different and is chosen from a hydrogen or a hydrocarbyl group having from 1-7 carbon atoms.

Regarding the position of the substituents, generally at least one group R is positioned on the cyclopentadienyl ring such that it is distal to the bridge R". However, in some embodiments of the invention at least one group R is positioned on the cyclopentadienyl ring such that it is proximal to the bridge R". It is particularly preferable that the cyclopentadienyl ring comprises a substituent ZR*₃ distal to the bridge R" and a substituent YR#₃ proximal to the bridge and non-vicinal to ZR*₃. In some embodiments of the present invention, the cyclopentadienyl ring comprises a substituent ZR*₃ distal to the bridge R"; a substituent YR#₃ proximal to the bridge R" and non-vicinal to ZR*₃; and a further substituent YR#₃ proximal to the bridge and vicinal to ZR*₃. The cyclopentadienyl ring may also comprise two substituents ZR*₃, each distal to the bridge R", if desired.

In a preferred embodiment, Z and Y in the above formulae independently comprise carbon or silicon. The catalyst compounds used in the present method are typically compounds in which ZR*₃ is selected from C(CH₃)₃, C(CH₃)₂Ph, CPh₃, and Si(CH₃)₃. It is particularly preferred that ZR*₃ comprises C(CH₃)₃. In further preferred embodiments of the present invention, YR#₃ comprises a methyl group.

The substitution pattern of the fluorene ring is not especially limited, provided that it does not adversely interfere with the co-polymerisation method of the present invention. Preferably, the fluorine ring comprises a substituent at the 2-position, and/or at the 3-position, and/or at the 6-position, and/or at the 7-position. More preferably both the 3-and the 6-positions, or both the 2- and the 7- positions are substituted. It is also possible that all the 2-, the 3- the 6 and the 7- positions are substituted.

The type of bridge present between the rings in the above-described catalysts is not itself particularly limited. Typically R" comprises an alkylidene group having 1 to 20 carbon atoms, a germanium group (e.g. a dialkyl germanium group), a silicon group (e.g. a dialkyl silicon group), a siloxane group (e.g. a dialkyl siloxane group), an alkyl phosphine group or an amine group. Preferably, the substituent comprises a silyl radical or a hydrocarbyl radical having at least one carbon atom to form the bridge, such as a substituted or unsubstituted ethylenyl radical (e.g. -CH₂CH₂-). Most preferably R" is isopropylidene (Me₂C), Ph₂C, ethylenyl, or Me₂Si.

It is further preferred that the metallocene compounds used in the present invention are those wherein M is Ti, Zr, or Hf. Typically, the Q groups attached to the metal atoms are halogen atoms, such as Cl.

In addition to the above metallocene compound, the catalyst used in the present methods may comprise one or more activating agents capable of activating any one or more of the catalyst components. Typically, the activating agent comprises an aluminium- or boron-containing activating agent.

Suitable aluminium-containing activating agents comprise an alumoxane, an alkyl aluminium compound and/or a Lewis acid.

The alumoxanes that can be used in the present invention are well known and preferably comprise oligomeric linear and/or cyclic alkyl alumoxanes represented by the formula (I): 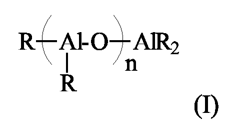 for oligomeric linear alumoxanes; and formula (II) 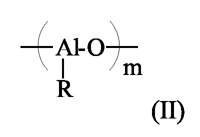 for oligomeric cyclic alumoxanes,
wherein n is 1-40, preferably 10-20; m is 3-40, preferably 3-20; and R is a C₁-C₈ alkyl group, preferably methyl. Generally, in the preparation of alumoxanes from, for example, aluminium trimethyl and water, a mixture of linear and cyclic compounds is obtained.

Suitable boron-containing activating agents may comprise a triphenylcarbenium boronate, such as tetrakis-pentafluorophenyl-borato-triphenylcarbenium as described in EP-A-0427696: 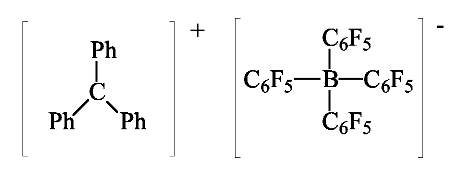 or those of the general formula below, as described in EP-A-0277004 (page 6, line 30 to page 7, line 7):

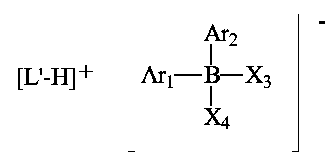

Other preferred activating agents include hydroxy isobutylaluminium and a metal aluminoxinate. These are particularly preferred when at least one Q in the general formula for metallocenes comprises an alkyl group.

The catalyst systems employed in the present invention may be employed in any type of co-polymerisation method, provided that the required catalytic activity is not impaired. In a preferred embodiment of the present invention, the catalyst system is employed in a solution polymerisation process, which is homogeneous, or a slurry process, which is heterogeneous. In a solution process, typical solvents include hydrocarbons having 4-7 carbon atoms such as heptane, toluene or cyclohexane. In a slurry process, it is necessary to immobilise the catalyst system on an inert support, particularly a porous solid support such as talc, inorganic oxides and resinous support materials such as polyolefin. Preferably, the support material is an inorganic oxide in its finely divided form.

Suitable inorganic oxide materials that are desirably employed in accordance with this invention include group IIA, IIIA, IVA, or IVB metal oxides such as silica, alumina and mixtures thereof. Other inorganic oxides that may be employed, either alone or in combination with the silica or alumina, are magnesia, titania, zirconia, and the like. Other suitable support materials, however, can be employed, for example, finely divided functionalised polyolefins such as finely divided polyethylene.

Preferably, the support is a silica support having a surface area of from 200-700 m²/g and a pore volume of from 0.5-3 ml/g.

The amount of activating agent and metallocene usefully employed in the preparation of the solid support catalyst can vary over a wide range. Preferably, the activating agent to transition metal mole ratio is in the range between 1:1 and 100:1, preferably in the range 5:1 and 50:1.

The order of addition of the catalyst components and activating agent to the support material can vary. In accordance with a preferred embodiment of the present invention activating agent dissolved in a suitable inert hydrocarbon solvent is added to the support material slurried in the same or other suitable hydrocarbon liquid and thereafter a mixture of the catalyst components is added to the slurry.

Preferred solvents include mineral oils and the various hydrocarbons which are liquid at reaction temperature and which do not react with the individual ingredients. Illustrative examples of the useful solvents include the alkanes such as pentane, iso-pentane, hexane, heptane, octane and nonane; cycloalkanes such as cyclopentane and cyclohexane, and aromatics such as benzene, toluene, ethylbenzene and diethylbenzene.

Preferably, the support material is slurried in toluene and the catalyst components and activating agent are dissolved in toluene prior to addition to the support material.

Applications for which the polymers of the present invention are particularly suited include films and impact co-polymers.

## Claims

1. A method for the production of an olefin co-polymer, which method comprises co-polymerising two or more olefin monomers in the presence of a metallocene catalyst, wherein the metallocene catalyst comprises a metallocene having the following formula:
R"(CpRₘ)(FluR'ₙ)MQ₂
wherein Cp comprises a cyclopentadienyl ring; Flu comprises a fluorenyl ring; R" comprises a structural bridge imparting stereorigidity to the component; each R is the same or different and is an organic group; m is an integer of from 1-4; each R' is the same or different and is an organic group; n is an integer of from 0-8; M is a metal atom from group IVB of the Periodic Table or is vanadium; and each Q is a hydrocarbon having from 1-20 carbon atoms or is a halogen.

2. A method according to claim 1, wherein at least one group R is positioned on the cyclopentadienyl ring such that it is distal to the bridge R".

3. A method according to claim 1 or claim 2, wherein at least one group R comprises a bulky group of the formula ZR*₃ in which Z is an atom from group IVA of the Periodic Table and each R* is the same or different and is chosen from a hydrogen or a hydrocarbyl group having from 1-20 carbon atoms.

4. A method according to any preceding claim, wherein at least one further group R comprises a group of the formula YR#₃ in which Y is an atom from group IVA of the Periodic Table, and each R# is the same or different and is chosen from a hydrogen or a hydrocarbyl group having from 1-7 carbon atoms.

5. A method according to any of claims 2-4, wherein the cyclopentadienyl ring comprises a substituent ZR*₃ distal to the bridge R" and a substituent YR#₃ proximal to the bridge and non-vicinal to ZR*₃.

6. A method according to any preceding claim, wherein the fluorine ring comprises a substituent at the 3-position and/or at the 6-position, or at the 2-position and/or at the 7-position.

7. A method according to any of claims 2-9, wherein ZR*₃ is selected from C(CH₃)₃, C(CH₃)₂Ph, CPh₃, and Si(CH₃)₃.

8. A method according to any of claims 3-7, wherein YR#₃ comprises CH₃.

9. A method according to any preceding claim, wherein R" comprises a silyl radical or a hydrocarbyl radical having at least one carbon atom to form the bridge.

10. A method according to any preceding claim, wherein M is Ti, Zr, or Hf.

11. A method according to any preceding claim, wherein Q is Cl.

12. A method according to any preceding claim, wherein ethylene is employed as an olefin monomer.

13. A method according to any preceding claim, wherein propylene is employed as an olefin monomer.

14. Use of a metallocene catalyst for producing a substantially quasi-random olefm co-polymer, wherein the metallocene catalyst comprises a metallocene having the following formula:
R"(CpRₘ)(FluR'ₙ)MQ₂
wherein Cp comprises a cyclopentadienyl ring; Flu comprises a fluorenyl ring; R" comprises a structural bridge imparting stereorigidity to the component; each R is the same or different and is an organic group; m is an integer of from 1-4; each R' is the same or different and is an organic group; n is an integer of from 0-8; M is a metal atom from group IVB of the Periodic Table or is vanadium; and each Q is a hydrocarbon having from 1-20 carbon atoms or is a halogen.

15. Use according to claim 14, wherein the metallocene compound is a compound as defined in any of claims 2-11.

16. Use according to claim 14 or claim 15 for forming an ethylene/propylene co-polymer having a melting temperature of about 105 °C.

17. A substantially quasi-random olefin co-polymer, obtainable according to a method as defined in any of claims 1-13.
